# EUROPÄISCHE PATENTSCHRIFT

(11) **EP 2 862 788 B1**
(45) Veröffentlichungstag und Bekanntmachung des Hinweises auf die Patenterteilung: **12.12.2018**
(21) Anmeldenummer: 13188969.3
(22) Anmeldetag: 16.10.2013
(51) Int. Cl.: B62M 6/45, B62M 6/55

(54) **Steuereinheit zur Verwendung in einem von einem Fahrer antreibbaren Fortbewegungsmittel**
Control unit for use in a means of locomotion which can be driven by a driver
Unité de commande destinée à être utilisée dans un moyen de déplacement pouvant être entraîné par un conducteur

(43) Veröffentlichungstag der Anmeldung: 22.04.2015
(73) Patentinhaber: Conti Temic Microelectronic GmbH, 90411 Nürnberg (DE)
(72) Erfinder: Schlotter, Michael, 90562 Heroldsberg (DE); Eglinger, Markus, 91456 Diespeck (DE); Salhi, Youssef, 90443 Nürnberg (DE); Breitenbach, Stephan, 90429 Nürnberg (DE); Welsing, David, 90411 Nürnberg (DE); Dameris, Ralf, 90443 Nürnberg (DE)
(74) Vertreter: Bonn, Roman Klemens

(56) Entgegenhaltungen:
- EP-A2- 1 129 932
- WO-A1-2012/066124
- DE-A1-102011 084 931
- DE-A1-102012 107 940
- DE-A1-102013 004 886
- JP-B- 4 056 130

## Beschreibung

Es werden eine Steuereinheit zur Verwendung in einem von einem Fahrer antreibbaren Fortbewegungsmittel sowie ein von einem Fahrer antreibbares Fortbewegungsmittel mit einer solchen Steuereinheit angegeben.

Die EP 1 129 932 A2 beschreibt eine Steuereinheit für ein von einem Fahrer antreibbares Fortbewegungsmittel. Die Steuereinheit ist eingerichtet, ein Schaltmittel und eine elektrische Antriebseinheit des Fortbewegungsmittels zu steuern.

Aus der DE 10 2012 107 940 A1 ist eine Fahrrad-Antriebsvorrichtung bekannt, die ein Fahrrad steuert, welches einen elektrischen Antriebsunterstützungsmotor und ein Getriebe hat.

DE 10 2011 084 931 A1 beschreibt ein Fahrrad mit einem elektrischen Zusatzantrieb gemäß der Präambel von Anspruch 1, der mit einer Radnabe des Vorderrades oder des Hinterrades zur Antriebsunterstützung gekoppelt ist, wobei der Zusatzantrieb ein mehrstufiges Getriebe umfasst, und wobei der Getriebeausgang mit einer der Radnaben gekoppelt ist.

Eine zu lösende Aufgabe besteht darin, insbesondere eine Steuereinheit zur Verwendung in einem von einem Fahrer antreibbaren Fortbewegungsmittel sowie ein von einem Fahrer antreibbares Fortbewegungsmittel mit einer solchen Steuereinheit anzugeben, welche geringen Verschleiß, schnellen Gangwechsel, kurze Unterbrechung der Kraftübertragung, geringen Geräuschpegel während des Schaltvorgangs, geringe Unfallgefahr, hohen Fahrkomfort und/oder einen hohen Gesamtwirkungsgrad des Antriebssystems aufweisen.

Gemäß der erfindungsgemässen Ausführungsform der Steuereinheit zur Verwendung in einem von einem Fahrer antreibbaren Fortbewegungsmittel umfasst das Fortbewegungsmittel eine elektrische Antriebseinheit, eine durch Muskelkraft betreibbare mechanische Antriebseinheit sowie mindestens ein durch mindestens ein Schaltmittel schaltbares Getriebe, wobei die Steuereinheit dazu ausgebildet ist, das Schaltmittel und die elektrische Antriebseinheit zu steuern, wobei das schaltbare Getriebe dazu ausgebildet ist, ein von dem Fahrer auf die mechanische Antriebseinheit aufgebrachtes erstes Drehmoment in ein zweites Drehmoment umzusetzen, und wobei das Fortbewegungsmittel unter Wirkung des zweiten Drehmoments und eines von der elektrischen Antriebseinheit aufgebrachten dritten Drehmoments bewegbar ist. Die Steuereinheit ist dazu ausgebildet ist, eine Eigenschaft eines Schaltvorgangs festzulegen und das Schaltmittel und die elektrische Antriebseinheit auf Grundlage der Eigenschaft des Schaltvorgangs zu steuern, wobei die Eigenschaft des Schaltvorgangs ein Schaltzeitpunkt ist. Das Fortbewegungsmittel umfasst ferner mindestens einen Sensor und die Steuereinheit ist dazu ausgebildet, die Eigenschaft des Schaltvorgangs auf Grundlage mindestens einer von dem mindestens einen Sensor ermittelten Messgröße festzulegen. Die mindestens eine Messgröße umfasst eine Position der mechanischen Antriebseinheit und die Steuereinheit ist dazu ausgebildet, den Schaltzeitpunkt so festzulegen, dass zu dem Schaltzeitpunkt die mechanische Antriebseinheit eine bestimmte Position einnimmt.

Die Steuereinheit ist dazu ausgebildet, das Schaltmittel und die elektrische Antriebseinheit so zu steuern, dass das von der elektrischen Antriebseinheit aufgebrachte dritte Drehmoment während des Schaltvorgangs erhöht ist oder erhöht wird.

Unter einem Getriebe ist hier und im Folgenden ein Element zu verstehen, welches dazu ausgebildet ist, ein auf das Element einwirkendes Drehmoment aufzunehmen und in der Folge seinerseits ein Drehmoment auszuüben. Das einwirkende Drehmoment wird also in das ausgeübte Drehmoment umgesetzt. Dabei besteht zwischen dem einwirkenden Drehmoment und dem ausgeübten Drehmoment ein wohlbestimmtes Verhältnis, welches bei einem festen Getriebe unveränderlich ist und bei einem schaltbaren Getriebe veränderbar ist, wobei die Veränderung des Verhältnisses als Schalten bezeichnet wird.

Als Steuereinheit im Sinne der vorliegenden Anmeldung ist auch eine Mehrzahl von (beispielsweise physisch separaten) Steuergeräten anzusehen, wenn diese als eine Einheit betrachtet werden können und die hier beschriebenen Funktionen ausüben können. Dies setzt im Allgemeinen einen Informationsfluss zwischen den verschiedenen Steuergeräten voraus. Beispielsweise können zwei Steuergeräte, von denen ein erstes dazu ausgebildet ist, eine elektrische Antriebseinheit zu steuern, und von denen ein zweites dazu ausgebildet ist, ein Schaltmittel zum Schalten eines schaltbaren Getriebes zu steuern, gemeinsam als Steuereinheit der vorliegenden Anmeldung betrachtet werden, wenn zwischen ihnen ein Informationsaustausch beispielsweise über eine Zustandsgröße der elektrischen Antriebseinheit, eine Position des Schaltmittels und/oder von mindestens einem der Steuergeräte berechnete Sollgrößen und/oder Schaltzeitpunkte erfolgen kann. Die verschiedenen Steuergeräte können beispielsweise in einer symmetrischen Beziehung zueinander stehen und/oder in mehreren Richtungen Informationen untereinander austauschen, oder ein Steuergerät kann beispielsweise als Controller dienen, welcher ein oder mehrere weitere Steuergeräte kontrolliert, beispielsweise ein Steuergerät zur Steuerung der elektrischen Antriebseinheit sowie ein Steuergerät zur Steuerung des Schaltmittels.

Bei der elektrischen Antriebseinheit handelt es sich vorzugsweise um einen Elektromotor. Bei der mechanischen Antriebseinheit handelt es sich vorzugsweise um eine Pedalkurbel. Bei dem Schaltmittel handelt es sich vorzugsweise um einen Schaltaktuator, insbesondere einen elektrischen Schaltaktuator. Das Fortbewegungsmittel kann auch mehr als einen Schaltaktuator, insbesondere genau zwei Schaltaktuatoren umfassen. Bei dem schaltbaren Getriebe handelt es sich vorzugsweise um eine kontinuierlich-variable oder diskrete Nabenschaltung. Wahlweise kann es sich bei dem schaltbaren Getriebe auch um eine Kettenschaltung handeln.

Dadurch, dass das Schaltmittel und die elektrische Antriebseinheit durch dieselbe Steuereinheit gesteuert werden, wird erreicht, dass zwischen der Steuerung des Schaltmittels und der Steuerung der elektrischen Antriebseinheit eine Abhängigkeit bestehen kann; das heißt, dass die Steuerung des Schaltmittels und die Steuerung der elektrischen Antriebseinheit miteinander koordiniert sein oder koordiniert werden können.

Gemäß zumindest einer Ausführungsform der Steuereinheit wirkt das dritte Drehmoment separat von dem ersten Drehmoment. Das heißt, das dritte Drehmoment wird nicht durch das schaltbare Getriebe umgesetzt, sondern wirkt unabhängig von diesem auf das Fortbewegungsmittel.

Gemäß zumindest einer Ausführungsform der Steuereinheit ist das Fortbewegungsmittel dazu ausgebildet, unter Wirkung des zweiten Drehmoments eine erste Beschleunigung zu erfahren und unter Wirkung des dritten Drehmoments eine zweite Beschleunigung zu erfahren, wobei die erste Beschleunigung und die zweite Beschleunigung sich zu einer dritten Beschleunigung des Fortbewegungsmittels addieren. Dabei ist unter einer Beschleunigung nicht die Veränderung des Bewegungszustands des Fortbewegungsmittels zu verstehen, sondern ein additiver Beitrag zu einer solchen Veränderung. Insbesondere kann der Bewegungszustand des Fortbewegungsmittels beispielsweise trotz Auftreten der dritten Beschleunigung unverändert bleiben, falls der dritten Beschleunigung eine gleich große, aber entgegengesetzte vierte Beschleunigung, beispielsweise aufgrund von Reibungskräften, entgegenwirkt.

Die Steuereinheit dazu ausgebildet, eine Eigenschaft eines Schaltvorgangs festzulegen und das Schaltmittel und die elektrische Antriebseinheit auf Grundlage der Eigenschaft des Schaltvorgangs zu steuern. Die Eigenschaft des Schaltvorgangs ist ein Schaltzeitpunkt.

Erfindungsgemäss umfasst das Fortbewegungsmittel ferner mindestens einen Sensor, und die Steuereinheit ist dazu ausgebildet, die Eigenschaft des Schaltvorgangs auf Grundlage mindestens einer von dem mindestens einen Sensor ermittelten Messgröße zu steuern. Bei der mindestens einen Messgröße kann es sich beispielsweise um das erste, zweite oder dritte Drehmoment, eine Fahrgeschwindigkeit, eine Steigung der Fahrstrecke, eine Herzfrequenz des Fahrers oder eine Kadenz handeln. Unter einer Kadenz wird hier und im Folgenden eine Winkelgeschwindigkeit einer Pedalkurbel verstanden.

Erfindungsgemäss ist die Eigenschaft des Schaltvorgangs ein Schaltzeitpunkt. Vorzugsweise umfasst die mindestens eine Messgröße das erste Drehmoment, und die Steuereinheit ist dazu ausgebildet, den Schaltzeitpunkt so festzulegen, dass der zeitliche Verlauf des ersten Drehmoments während einer Dauer des Schaltvorgangs ein Minimum aufweist. Dadurch wird erreicht, dass das schaltbare Getriebe zu dem Schaltzeitpunkt möglichst wenig belastet ist. Dies führt zu geringerem Verschleiß, schnellerem Gangwechsel, kürzerer Unterbrechung der Kraftübertragung, geringerem Geräuschpegel während des Schaltvorgangs, geringerer Unfallgefahr, höherem Fahrkomfort sowie einem höheren Gesamtwirkungsgrad des Antriebssystems.

Vorzugsweise liegt ein das schaltbare Getriebe belastendes Drehmoment während des Schaltvorgangs unterhalb eines Grenzwerts von 25 Nm, besonders bevorzugt von 10 Nm.

Die mindestens eine Messgröße umfasst eine Position der mechanischen Antriebseinheit, und die Steuereinheit ist dazu ausgebildet, den Schaltzeitpunkt so festzulegen, dass zu dem Schaltzeitpunkt die mechanische Antriebseinheit eine bestimmte Position aufweist. Beispielsweise kann die mechanische Antriebseinheit eine Pedalkurbel sein, und die bestimmte Position kann beispielsweise eine vertikale Position sein oder eine Position, die beispielsweise einen Winkel von nicht mehr als 10° mit einer vertikalen Position einschließt. Dadurch wird erreicht, dass der Fahrer zu dem Schaltzeitpunkt ein möglichst geringes Drehmoment auf die Pedalkurbel aufbringen
kann. Während bei einer Wahl des Schaltzeitpunkts anhand des aufgebrachten Drehmoments nicht ausgeschlossen werden kann, dass der Fahrer noch während des Schaltvorgangs plötzlich ein stark erhöhtes Drehmoment aufbringt, ist bei einer bestimmten, bauartabhängigen, beispielsweise vertikalen Position der Pedalkurbel das Aufbringen eines hohen Drehmoments anatomisch schwierig. Wahlweise kann die Position der mechanischen Antriebseinheit aus Messungen des ersten Drehmoments abgeleitet werden, welches beim Treten typischerweise einen im Wesentlichen periodischen Verlauf in Phase mit der Position der mechanischen Antriebseinheit aufweist.

Erfindungsgemäss ist die Steuereinheit dazu ausgebildet, das Schaltmittel und die elektrische Antriebseinheit so zu steuern, dass das von der elektrischen Antriebseinheit aufgebrachte Drehmoment während des Schaltvorgangs erhöht ist oder erhöht wird. Dadurch wird erreicht, dass das schaltbare Getriebe während des Schaltvorgangs möglichst wenig belastet ist.

Das schaltbare Getriebe kann insbesondere eine Kettenschaltung oder eine Nabenschaltung sein. Eine Kettenschaltung umfasst eine Kette sowie eine Mehrzahl von Drehelementen mit verschiedenen Durchmessern, beispielsweise Ritzeln und/oder Kettenrädern. Die Kettenschaltung kann geschaltet werden, indem die Kette mit verschiedenen Drehelementen in Eingriff gebracht wird. Eine Nabenschaltung ist eine in eine Radnabe integrierte Schaltung, in welcher die Drehmomente in der Regel durch ein oder mehrere Planetengetriebe umgesetzt werden.

Das Fortbewegungsmittel kann eine beliebige Anzahl von Rädern umfassen und kann somit beispielsweise ein Einrad, ein Zweirad, ein Dreirad oder ein Vierrad sein. Vorzugsweise ist das Fortbewegungsmittel ein Zweirad; das heißt, das Fortbewegungsmittel weist vorzugsweise genau zwei Räder auf. Das Zweirad kann insbesondere ein elektrisch unterstütztes Fahrrad, ein E-Bike oder ein Pedelec sein. Vorzugsweise bewirkt das zweite Drehmoment die erste Beschleunigung, indem es auf das Hinterrad des Zweirads wirkt, und das dritte Drehmoment bewirkt die zweite Beschleunigung, indem es auf das Hinterrad des Zweirads wirkt. Die zweiten und dritten Drehmomente können jedoch auch auf verschiedene Räder des Fortbewegungsmittels wirken; insbesondere kann bei einem Zweirad das zweite Drehmoment auf das Hinterrad und das dritte Drehmoment auf das Vorderrad wirken. Das dritte Drehmoment kann jeweils entweder direkt oder über ein weiteres Getriebe auf das jeweilige Rad wirken, wobei das weitere Getriebe ein festes Getriebe oder ein variables Getriebe sein kann.

Es wird ferner ein Fortbewegungsmittel mit einer oben beschriebenen Steuereinheit angegeben, wobei das Fortbewegungsmittel eine elektrische Antriebseinheit, eine durch Muskelkraft betreibbare mechanische Antriebseinheit sowie mindestens ein durch mindestens ein Schaltmittel schaltbares Getriebe umfasst, wobei das schaltbare Getriebe dazu ausgebildet ist, ein von dem Fahrer auf die mechanische Antriebseinheit aufgebrachtes erstes Drehmoment in ein zweites Drehmoment umzusetzen, und wobei das Fortbewegungsmittel unter Wirkung des zweiten Drehmoments und eines von der elektrischen Antriebseinheit aufgebrachten dritten Drehmoments bewegbar ist.

Im Folgenden werden die hier beschriebene Steuereinheit und das hier beschriebene Fortbewegungsmittel anhand von Ausführungsbeispielen und dazugehörigen Figuren 1, 2 und 3 näher erläutert.
Die Figur 1 zeigt eine schematische Darstellung der in dem hier beschriebenen Fortbewegungsmittel auftretenden Drehmomente und Beschleunigungen.
Die Figur 2 zeigt eine schematische Darstellung des Steuerungsprinzips eines Ausführungsbeispiels der hier beschriebenen Steuereinheit.
Die Figur 3 zeigt ein Ausführungsbeispiel des hier beschriebenen Fortbewegungsmittels.

Gleiche, gleichartige oder gleich wirkende Elemente sind in den Figuren mit denselben Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

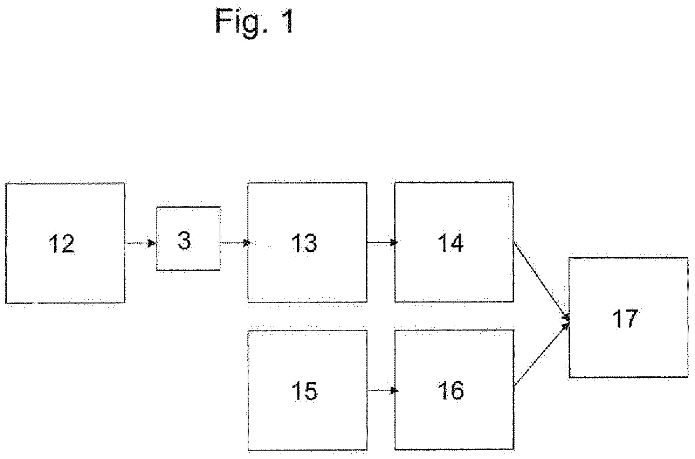

Die schematische Darstellung der Figur 1 zeigt die in dem hier beschriebenen Fortbewegungsmittel auftretenden Drehmomente und Beschleunigungen. Ein von dem Fahrer auf die mechanische Antriebseinheit aufgebrachtes erstes Drehmoment 12 wird von einem schaltbaren Getriebe 3 in ein zweites Drehmoment 13 umgesetzt. Das zweite Drehmoment 13 bewirkt eine erste Beschleunigung 14 des Fortbewegungsmittels, und ein von der elektrischen Antriebseinheit aufgebrachtes drittes Drehmoment 15 bewirkt eine zweite Beschleunigung 16. Die erste Beschleunigung 14 und die zweite Beschleunigung 16 addieren sich zu einer dritten Beschleunigung 17.

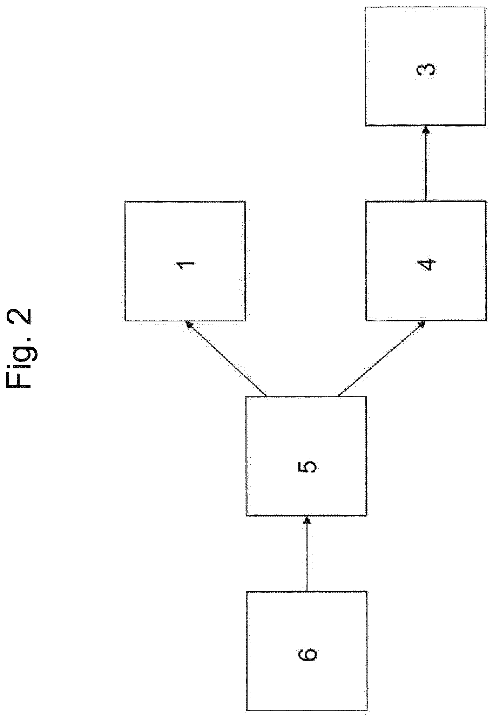

Die schematische Darstellung der Figur 2 zeigt das Steuerungsprinzip eines Ausführungsbeispiels der hier beschriebenen Steuereinheit. Ein Sensor 6 ermittelt mindestens eine Messgröße, die an eine Steuereinheit 5 übermittelt wird. Die Steuereinheit 5 regelt aufgrund der ermittelten Messgröße eine elektrische Antriebseinheit 1. Des Weiteren regelt die Steuereinheit 5 aufgrund der ermittelten Messgröße ein Schaltmittel 4. Das Schaltmittel 4 schaltet ein schaltbares Getriebe 3.

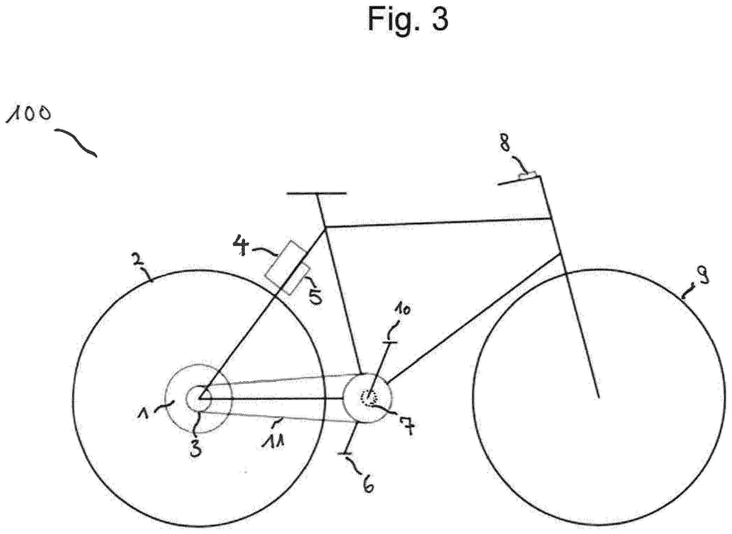

Die Figur 3 zeigt ein Ausführungsbeispiel des hier beschriebenen Fortbewegungsmittels. Das Fortbewegungsmittel ist in diesem Ausführungsbeispiel ein insgesamt mit 100 bezeichnetes E-Bike. Das E-Bike 100 umfasst einen elektrischen Antriebsmotor 1, welcher als elektrische Antriebseinheit dient, ein Hinterrad 2 sowie ein Vorderrad 9, eine Nabenschaltung 3, welche als schaltbares Getriebe dient, einen Schaltaktuator 4, welcher als Schaltmittel dient, eine Steuereinheit 5, Sensoren 6, eine Tretlagerwelle 7, Pedalkurbeln 10, welche als mechanische Antriebseinheit dienen, eine Kette 11 sowie wahlweise eine Bedienvorrichtung 8.

Der elektrische Antriebsmotor 1 bringt das dritte Drehmoment auf und überträgt es entweder direkt oder über ein festes Getriebe an das Hinterrad 2, in dessen Radnabe er integriert ist. Wahlweise kann der elektrische Antriebsmotor 1 auch in die Radnabe des Vorderrads 9 integriert sein und auf dieses wirken. Wahlweise kann der elektrische Antriebsmotor 1 auch außerhalb der Radnaben angebracht sein und durch ein von der Nabenschaltung 3 getrenntes Ketten-, Riemen-, Kegel- oder Kardanwellengetriebe auf das Hinterrad 2 oder das Vorderrad 9 wirken. Dabei kann der elektrische Antriebsmotor 1 in der Nähe der Tretlagerwelle 7, hinter einem Sattel oder an einer Gabel des E-Bikes 100 angebracht sein.

Die Nabenschaltung 3 kann kontinuierlich-variabel oder diskret ausgeführt sein und ist ebenfalls in die Radnabe des Hinterrads 2 integriert. Wahlweise kann als schaltbares Getriebe auch jede aus dem Stand der Technik bekannte Fahrradschaltung dienen, beispielsweise eine Kettenschaltung, welche ein Schaltwerk an dem Hinterrad 2 und optional einen Umwerfer in der Nähe der Tretlagerwelle 7 umfasst. Ein Verstellmechanismus der Nabenschaltung 3 ist durch Bowdenzüge, Getriebe und/oder andere mechanische Verbindungen mit dem Schaltaktuator 4 verbunden, welcher durch Positionsänderung das Übersetzungsverhältnis verstellen kann. Ist das schaltbare Getriebe als Kettenschaltung ausgeführt, so können das Schaltwerk und der optionale Umwerfer jeweils mit einem Schaltaktuator verbunden sein, und die Schaltaktuatoren können durch Positionsänderung den Gang verstellen. Die weitere Beschreibung bezieht sich auf den Fall, dass das schaltbare Getriebe als Nabenschaltung 3 ausgeführt ist; die beschriebenen Merkmale des Schaltaktuators 4 zur Änderung des Übersetzungsverhältnisses der Nabenschaltung 3 sind jedoch ebenso auch für Schaltaktuatoren zur Änderung des Ganges einer Kettenschaltung denkbar.

Die Steuereinheit 5 regelt sowohl den elektrischen Antriebsmotor 1 als auch den Schaltaktuator 4 und ist mit den Sensoren 6 verbunden, welche beispielsweise ein von dem Fahrer auf die Pedalkurbeln 10 aufgebrachtes Drehmoment, eine Fahrgeschwindigkeit, eine Position der Pedalkurbeln 10, eine Winkelgeschwindigkeit (Kadenz) der Pedalkurbeln 10 und/oder weitere Größen messen. Die Sensoren 6 sind in der Umgebung der Tretlagerwelle 7 angebracht. Wahlweise kann auch das Drehmoment an der Radnabe des Hinterrads 2 gemessen werden, da dieses Drehmoment und das von dem Fahrer auf die Pedalkurbeln 10 ausgeübte Drehmoment zueinander proportional sind.

Die Bedienung durch den Fahrer erfolgt über die Pedalkurbeln 10. Wenn der Fahrer ein erstes Drehmoment auf die Pedalkurbeln 10 ausübt, wird dieses über die Tretlagerwelle 7 und die Kette 11 auf die Nabenschaltung 3 übertragen und von dieser in ein zweites Drehmoment umgesetzt. Gleichzeitig regelt die Steuereinheit 5 den elektrischen Antriebsmotor 1 so, dass er ein von der Steuereinheit 5 berechnetes drittes Drehmoment ausübt. Wahlweise kann die Steuereinheit 5 eine Leistung berechnen, die der elektrische Antriebsmotor 1 abgeben soll, und den elektrischen Antriebsmotor 1 so regeln, dass er ein der berechneten Leistung entsprechendes drittes Drehmoment ausübt. Mit der optionalen Bedienvorrichtung 8 kann die Berechnung des von dem elektrischen Antriebsmotor 1 auszuübenden dritten Drehmoments vom Fahrer beeinflusst werden, beispielsweise durch die Änderung von Parametern, durch Aktivierung einer Schiebehilfe bei Nichtbetätigung der Pedalkurbeln 10 und/oder durch Deaktivierung des elektrischen Antriebsmotors 1 in einem Notfall.

Der Schaltaktuator 4 wird positionsgeregelt oder positionsgesteuert betrieben. Das heißt, die Steuereinheit 5 gibt dem Schaltaktuator 4 eine Sollposition vor, und optional kann zusätzlich die Istposition des Schaltaktuators 4 gemessen und zur Regelung der Position des Schaltaktuators 4 durch die Steuereinheit 5 herangezogen werden. Optional kann zusätzlich eine Kraft- oder Stromüberwachung vorgesehen sein; das heißt, dass die von dem Schaltaktuator 4 aufgebrachte Kraft und/oder der durch den Schaltaktuator 4 fließende Strom auf einen bestimmten Wert begrenzt wird, um eine mechanische Schädigung, beispielsweise bei Stillstand des Fortbewegungsmittels 100, zu vermeiden.

Die Sollposition des Schaltaktuators 4 wird von der Steuereinheit 5 so vorgegeben, dass die Nabenschaltung 3 ein bestimmtes Übersetzungsverhältnis annimmt. Im Automatikmodus erfolgt die Wahl des Übersetzungsverhältnisses durch die Steuereinheit 5, basierend auf gemessenen Eingangsgrößen (beispielsweise Kadenz, Geschwindigkeit, Steigung, Herzfrequenz) und durch den Fahrer vorgegebenen Parametern (beipielsweise Wunschkadenz, Wunschdrehmoment, Zielherzfrequenz). Wahlweise kann der Antrieb auch in einem manuellen Modus betrieben werden, in dem der Fahrer das gewünschte Übersetzungsverhältnis direkt selbst wählt. Die Steuereinheit 5 überwacht ständig die momentane Kadenz, das vom Fahrer aufgebrachte Drehmoment, die Fahrgeschwindigkeit und/oder die Position der Pedalkurbeln 10. Mit diesen Daten berechnet die Steuereinheit 5 optimale Schaltzeitpunkte. Die Einstellung eines neuen Übersetzungsverhältnisses erfolgt nicht unmittelbar nach dessen Auswahl, sondern erst zum nächsten von der Steuereinheit 5 berechneten Schaltzeitpunkt. Zum gewählten Schaltzeitpunkt wird dann das Solldrehmoment des elektrischen Antriebsmotors 1 von der Steuereinheit 5 so beeinflusst und der Schaltaktuator 4 so angesteuert, dass der Schaltvorgang optimiert wird.

## Patentansprüche

1. Steuereinheit (5) zur Verwendung in einem von einem Fahrer antreibbaren Fortbewegungsmittel (100),
wobei das Fortbewegungsmittel (100) umfasst:
eine elektrische Antriebseinheit (1),
eine durch Muskelkraft betreibbare mechanische Antriebseinheit (10), und
mindestens ein durch mindestens ein Schaltmittel (4) schaltbares Getriebe (3),
wobei die Steuereinheit (5) dazu ausgebildet ist, das Schaltmittel (4) und die elektrische Antriebseinheit (1) zu steuern,
wobei das schaltbare Getriebe (3) dazu ausgebildet ist, ein von dem Fahrer auf die mechanische Antriebseinheit (10) aufgebrachtes erstes Drehmoment (12) in ein zweites Drehmoment (13) umzusetzen,
wobei das Fortbewegungsmittel (100) unter Wirkung des zweiten Drehmoments (13) und eines von der elektrischen Antriebseinheit (1) aufgebrachten dritten Drehmoments (15) bewegbar ist,
wobei die Steuereinheit (5) dazu ausgebildet ist, eine Eigenschaft eines Schaltvorgangs festzulegen und das Schaltmittel (4) und die elektrische Antriebseinheit (1) auf Grundlage der Eigenschaft des Schaltvorgangs zu steuern, wobei die Eigenschaft des Schaltvorgangs ein Schaltzeitpunkt ist,
wobei das Fortbewegungsmittel (100) ferner mindestens einen Sensor (6) umfasst und die Steuereinheit (5) dazu ausgebildet ist, die Eigenschaft des Schaltvorgangs auf Grundlage mindestens einer von dem mindestens einen Sensor (6) ermittelten Messgröße festzulegen,
und wobei die mindestens eine Messgröße eine Position der mechanischen Antriebseinheit (10) umfasst und die Steuereinheit (5) dazu ausgebildet ist, den Schaltzeitpunkt so festzulegen, dass zu dem Schaltzeitpunkt die mechanische Antriebseinheit (10) eine bestimmte Position einnimmt, **dadurch gekennzeichnet, dass**
die Steuereinheit (5) dazu ausgebildet ist, das Schaltmittel (4) und die elektrische Antriebseinheit (1) so zu steuern, dass das von der elektrischen Antriebseinheit (1) aufgebrachte dritte Drehmoment (15) während des Schaltvorgangs erhöht ist oder erhöht wird.

2. Steuereinheit (5) nach Anspruch 1, wobei die mindestens eine Messgröße das erste Drehmoment (12) umfasst und die Steuereinheit (5) dazu ausgebildet ist, den Schaltzeitpunkt so festzulegen, dass der zeitliche Verlauf des ersten Drehmoments (12) während einer Dauer des Schaltvorgangs ein Minimum aufweist.

3. Von einem Fahrer antreibbares Fortbewegungsmittel (100) mit einer Steuereinheit (5) nach einem der vorangehenden Ansprüche, umfassend:
eine elektrische Antriebseinheit (1),
eine durch Muskelkraft betreibbare mechanische Antriebseinheit (10), und
mindestens ein durch mindestens ein Schaltmittel (4) schaltbares Getriebe (3),
wobei das schaltbare Getriebe (3) dazu ausgebildet ist, ein von dem Fahrer auf die mechanische Antriebseinheit (10) aufgebrachtes erstes Drehmoment (12) in ein zweites Drehmoment (13) umzusetzen, und
wobei das Fortbewegungsmittel (100) unter Wirkung des zweiten Drehmoments (13) und eines von der elektrischen Antriebseinheit (1) aufgebrachten dritten Drehmoments (15) bewegbar ist.

4. Fortbewegungsmittel (100) nach Anspruch 3 , wobei das Fortbewegungsmittel (100) ein Zweirad ist.

5. Fortbewegungsmittel (100) nach Anspruch 4 , wobei das zweite Drehmoment (13) eine erste Beschleunigung (14) bewirkt, indem es auf das Hinterrad (2) des Zweirads (100) wirkt, und wobei das dritte Drehmoment (15) eine zweite Beschleunigung (16) bewirkt, indem es auf das Hinterrad (2) des Zweirads (100) wirkt.

## Claims

1. Control unit (5) for use in a means of transport (100) which can be driven by a driver,
wherein the means of transport (100) comprises:
an electric drive unit (1),
a mechanical drive unit (10) which can be operated by muscle power, and
at least one transmission (3) which can be shifted by at least one shifting means (4),
wherein the control unit (5) is designed to control the shifting means (4) and the electric drive unit (1),
wherein the shiftable transmission (3) is designed to convert a first torque (12), applied to the mechanical drive unit (10) by the driver, into a second torque (13),
wherein the means of transport (100) can be moved under the effect of the second torque (13) and a third torque (15) which is applied by the electric drive unit (1),
wherein the control unit (5) is designed to define a property of a shifting process and to control the shifting means (4) and the electric drive unit (1) on the basis of the property of the shifting process,
wherein the property of the shifting process is a shifting time,
wherein the means of transport (100) also comprises at least one sensor (6), and the control unit (5) is designed to define the property of the shifting process on the basis of at least one measurement variable which is determined by the at least one sensor (6),
and wherein the at least one measurement variable comprises a position of the mechanical drive unit (10), and the control unit (5) is designed to define the shifting time in such a way that at the shifting time the mechanical drive unit (10) assumes a specific position, **characterized in that**
the control unit (5) is designed to control the shifting means (4) and the electric drive unit (1) in such a way that the third torque (15) which is applied by the electric drive unit (1) is in an increased state or is increased during the shifting process.

2. Control unit (5) according to Claim 1, wherein the at least one measurement variable comprises the first torque (12), and the control unit (5) is designed to define the shifting time in such a way that the time profile of the first torque (12) is at a minimum during the shifting process.

3. Means of transport (100) which can be driven by a driver and which has a control unit (5) according to one of the preceding claims, comprising:
an electric drive unit (1),
a mechanical drive unit (10) which can be operated by muscle power, and
at least one transmission (3) which can be shifted by at least one shifting means (4),
wherein the shiftable transmission (3) is designed to convert a first torque (12), applied to the mechanical drive unit (10) by the driver, into a third torque (13), and
wherein the means of transport (100) can be moved under the effect of the second torque (13) and a second torque (15) which is applied by the electric drive unit (1).

4. Means of transport (100) according to Claim 3, wherein the means of transport (100) is a two-wheeled vehicle.

5. Means of transport (100) according to Claim 4, wherein the second torque (13) brings about a first acceleration (14) by acting on the rear wheel (2) of the two-wheeled vehicle (100), and wherein the third torque (15) brings about a second acceleration (16) by acting on the rear wheel (2) of the two-wheeled vehicle (100).

## Revendications

1. Unité de commande (5) destinée à être utilisée dans un moyen de locomotion (100) pouvant être entraîné par un conducteur, dans laquelle ledit moyen de locomotion (100) comprend:
une unité d'entraînement électrique (1),
une unité d'entraînement mécanique (10) pouvant être entraînée par une force musculaire, et
au moins une transmission (3) pouvant être soumise à un changement de rapport par au moins un moyen de changement de rapport (4),
dans laquelle l'unité de commande (5) est conçue pour commander le moyen de changement de rapport (4) et l'unité d'entraînement électrique (1),
dans laquelle la transmission (3) pouvant être soumise à un changement de rapport est conçue pour convertir un premier couple (12) appliqué par le conducteur à l'unité d'entraînement mécanique (10) en un deuxième couple (13),
dans laquelle le moyen de locomotion (100) peut être déplacé sous l'action du deuxième couple (13) et d'un troisième couple (15) appliqué par l'unité d'entraînement électrique (1),
dans laquelle l'unité de commande (5) est conçue pour définir une caractéristique d'une opération de changement de rapport et pour commander le moyen de changement de rapport (4) et l'unité d'entraînement électrique (1) sur la base de la caractéristique de l'opération de changement de rapport, dans laquelle la caractéristique de l'opération de changement de rapport est un instant de changement de rapport,
dans laquelle le moyen de locomotion (100) comprend en outre au moins un capteur (6) et l'unité de commande (5) est conçue pour déterminer la caractéristique de l'opération de changement de rapport sur la base d'au moins une grandeur de mesure déterminée par ledit au moins un capteur (6), et
dans laquelle ladite au moins une grandeur de mesure comprend une position de l'unité d'entraînement mécanique (10) et l'unité de commande (5) est conçue pour définir l'instant de changement de rapport, de telle manière que l'unité d'entraînement mécanique (10) passe à une position déterminée à l'instant de changement de rapport,
**caractérisée en ce que** l'unité de commande (5) est conçue pour commander le moyen de changement de rapport (4) et l'unité d'entraînement électrique (1) de telle manière que le troisième couple (15) appliqué par l'unité d'entraînement électrique (1) soit augmenté ou augmente pendant l'opération de changement de rapport.

2. Unité de commande (5) selon la revendication 1, dans laquelle ladite au moins une grandeur de mesure comprend le premier couple (12) et l'unité de commande (5) est conçue pour déterminer l'instant de changement de rapport, de telle manière que le profil temporel du premier couple (12) présente un minimum pendant une durée de l'opération de changement de rapport.

3. Moyen de locomotion (100) pouvant être entraîné par un conducteur avec une unité de commande (5) selon l'une quelconque des revendications précédentes, comprenant:
une unité d'entraînement électrique (1),
une unité d'entraînement mécanique (10) pouvant être entraînée par une force musculaire, et
au moins une transmission (3) pouvant être soumise à un changement de rapport par au moins un moyen de changement de rapport (4),
dans lequel la transmission (3) pouvant être soumise à un changement de rapport est conçue pour convertir un premier couple (12) appliqué par le conducteur à l'unité d'entraînement mécanique (10) en un deuxième couple (13), et
dans lequel le moyen de locomotion (100) peut être déplacé sous l'action du deuxième couple (13) et d'un troisième couple (15) appliqué par l'unité d'entraînement électrique (1).

4. Moyen de locomotion (100) selon la revendication 3, dans lequel le moyen de locomotion (100) est un deux-roues.

5. Moyen de locomotion (100) selon la revendication 4, dans lequel le deuxième couple (13) provoque une première accélération (14), du fait qu'il agit sur la roue arrière (2) du deux-roues (100), et dans lequel le troisième couple (15) provoque une deuxième accélération (16), du fait qu'il agit sur la roue arrière (2) du deux-roues (100).
